# EUROPÄISCHE PATENTSCHRIFT

(11) **EP 1 589 262 B1**
(45) Veröffentlichungstag und Bekanntmachung des Hinweises auf die Patenterteilung: **30.05.2007**
(21) Anmeldenummer: 04009492.2
(22) Anmeldetag: 22.04.2004
(51) Int. Cl.: F16H 61/00, F16H 57/04

(54) **Hydraulische Steuereinrichtung für ein Doppelkupplungsgetriebe sowie ein Verfahren zum hydraulischen Ansteuern eines Doppelkupplungsgetriebes.**
Hydraulic control unit for a dual clutch transmission and method of hydraulic control of such a transmission
Dispositif de commande hydraulique pour une transmission à double embrayages et procédé de commande hydraulique d'une telle transmission

(43) Veröffentlichungstag der Anmeldung: 26.10.2005
(60) Teilanmeldung: 05011913.0
(73) Patentinhaber: Borg Warner Inc., Auburn Hills, MI 48326 (US)
(72) Erfinder: Ebinger, Günter, Dr., 76684 Oestringen (DE)
(74) Vertreter: Patentanwälte Westphal, Mussgnug & Partner

(56) Entgegenhaltungen:
- DE-A- 10 134 115
- DE-A- 10 155 050
- US-A- 5 240 093
- US-A1- 2002 002 878
- US-B1- 6 715 597

## Beschreibung

Doppelkupplungsgetriebe in Personenkraftwagen sind seit den 70er Jahren bekannt. So hat beispielsweise die Firma Porsche ein Parallelschaltgetriebe (PSG) entwickelt, welches unter der Bezeichnung PDK (Porsche Doppelkupplung) bekannt wurde.

Im Jahr 2003 ist die Firma Volkswagen mit einem neuartigen Doppelkupplungsgetriebe in Produktion gegangen, welches nunmehr unter der Kurzbezeichnung DSG (Direktschaltgetriebe) auf dem Markt ist.

In diesem Getriebe erfolgt die Betätigung der Kupplungen und Gänge durch hydraulische Aktuatoren. All diese hydraulischen Funktionen sind in einer zentralen Steuerungseinheit untergebracht.

Zur Druckversorgung der Aktuatoren wird ein sogenannter Hauptdruck (Hydraulikflüssigkeitshauptdruck) eingestellt. Hierzu dient ein Hauptdruckregelventil, das von einem elektromagnetischen Proportionalventil angesteuert wird.

Im weiteren Verlauf des Hydraulikflüssigkeitspfades zu den Aktuatoren teilt sich dieser in je eine Getriebehälfte auf, nämlich in einen Pfad zu den Aktuatoren der ungeraden Gänge und der dazugehörigen Kupplung und in einen Pfad zu den geraden Gängen und die dazugehörende Kupplung. Für jeden dieser Pfade ist ein Druckminderventil vorgesehen, das den Hauptdruck mindern kann. Diese Druckminderventile haben darüber hinaus auch Sicherheitsfunktion zu erfüllen, da sie den gesamten Pfad (gerade oder ungerade Gänge) drucklos schalten können.

Zur Kühlung des Getriebes ist ein Getriebekühler vorgesehen, der mit einem Kühlflüssigkeitsstrom versorgt wird, der dem Kupplungskühlflüssigkeitsstrom parallel geschaltet ist.

Eine Weitere Steuereinrichtung für ein Doppelkupplungsgetriebe ist aus der DE 10 155 050 bekannt, die alle Merkmale des Oberbegriffes der Ansprüche 1 und 17 offenbart.

Obwohl sich eine hydraulische Steuereinrichtung für ein Doppelkupplungsgetriebe der vorstehend beschriebenen Art dem Grunde nach bewährt hat, besteht weiterer Verbesserungsbedarf.

Die Aufgabe der Erfindung besteht nunmehr darin, ein vereinfachtes Verfahren zum hydraulischen Ansteuern eines Doppelkupplungsgetriebes vorzustellen. Weiterhin soll eine hydraulische Steuereinrichtung vorgestellt werden, welche einfacher aufgebaut ist und mit weniger Einzelkomponenten auskommt.

Diese Aufgabe wird durch eine hydraulische Steuereinrichtung für ein Doppelkupplungsgetriebe gemäß dem Patentanspruch 1 sowie ein Verfahren zum hydraulischen Ansteuern eines Doppelkupplungsgetriebes gemäß dem Patentanspruch 17 gelöst.

Vorteilhafte Ausführungen und Weiterbildungen der Erfindung sind in den Unteransprüchen angegeben.

Ausgehend von einem Verfahren zum hydraulischen Ansteuern eines Doppelkupplungsgetriebes, bei dem in einer Hauptdruckleitung ein Hydraulikflüssigkeitshauptdruck eingestellt wird und in einer zu einer ersten Kupplung und gegebenenfalls zugehörigen Gangaktuatoren führenden Versorgungsleitung ein erster Versorgungsdruck eingestellt wird und bei dem in einer zu einer zweiten Kupplung und gegebenenfalls zugehörigen Gangaktuatoren führenden Versorgungsleitung ein zweiter Versorgungsdruck eingestellt wird, ist erfindungsgemäß vorgesehen, dass die Höhe des einzustellenden Hydraulikflüssigkeitshauptdrucks von wenigstens einem der Versorgungsdrücke vorgegeben wird. Eine Anpassung an den tatsächlichen Druckbedarf in den beiden Kupplungen und den dazugehörigen Gangaktuatoren des Doppelkupplungsgetriebes ist dadurch möglich.

Ausgehend von einer hydraulischen Steuereinrichtung für ein Doppelkupplungsgetriebe entsprechend dem Volkswagen-DSG-Getriebe mit einem Hauptdruckregelventil zum Einstellen eines Hydraulikflüssigkeitshauptdrucks in einer Hauptdruckleitung sowie mit einem eingangsseitig mit der Hauptdruckleitung und ausgangsseitig mit einer ersten Versorgungsleitung für eine erste Kupplung und gegebenenfalls zugehörigen Gangaktuatoren verbundenen ersten Druckventil zum Einstellen eines ersten Versorgungsdrucks in der ersten Versorgungsleitung und mit einem eingangsseitig mit der Hauptdruckleitung und ausgangsseitig mit einer zweiten Versorgungsleitung für eine zweite Kupplung und gegebenenfalls zugehörige Gangaktuatoren verbundenen zweiten Druckregelventil zum Einstellen eines zweiten Versorgungsdrucks in der zweiten Versorgungsleitung ist erfindungsgemäß vorgesehen, dass einem Steuereingang des Hauptdruckregelventils ein von wenigstens einem der Versorgungsdrücke abhängiges Steuersignal zuführbar ist, welches die Höhe des einzustellenden Hydraulikflüssigkeitshauptdrucks vorgibt. Bei einer hydraulischen Steuereinrichtung gemäß der Erfindung kann auf ein elektromagnetisches Proportionalventil zum Ansteuern des Hauptdruckregelventils verzichtet werden, wie es beispielsweise in der zentralen Steuerungseinheit des Volkswagen-DSG-Getriebes eingesetzt ist.

In besonders vorteilhafter Ausgestaltung der erfindungsgemäßen hydraulischen Steuereinrichtung sowie des erfindungsgemäßen Verfahrens ist vorgesehen, dass die Höhe des einzustellenden Hydraulikflüssigkeitshauptdrucks von dem größeren der beiden Versorgungsdrücke vorgegeben wird bzw. dass das Steuersignal vom größeren der beiden Versorgungsdrücke abhängt. Der tatsächliche Druckbedarf wird nämlich maßgeblich von dem größeren der beiden Versorgungsdrücke bestimmt.

Eine besonders vorteilhafte Weiterbildung dieser Variante besteht darin, dass die Höhe des einzustellenden Hydraulikflüssigkeitshauptdrucks, d. h. der Sollwert des Hydraulikflüssigkeitshauptdrucks, mit dem größeren der beiden Versorgungsdrücke zunimmt. Bei der hydraulischen Steuereinrichtung gemäß der Erfindung nimmt demzufolge vorzugsweise die Größe des Steuersignals, welches den Sollwert des Hydraulikflüssigkeitshauptdrucks vorgibt, mit dem größeren der beiden Versorgungsdrücke zu.

Obwohl grundsätzlich jede ansteigende Abhängigkeit zwischen dem größeren der beiden Versorgungsdrücke und dem Sollwert des einzustellenden Hydraulikflüssigkeitshauptdrucks bzw. der Größe des diesen Sollwert vorgebenden Steuersignals möglich ist, hat es sich als ausreichend und hinreichend herausgestellt, wenn der Sollwert des Hydraulikflüssigkeitshauptdrucks proportional zum größeren der beiden Versorgungsdrücke gewählt wird. Dennoch kann ein Fachmann auf dem einschlägigen Gebiet bei Bedarf Maßnahmen vorsehen, den Sollwert des Hydraulikflüssigkeitshauptdrucks über- oder unterproportional zum größeren der beiden hydraulischen Vorsteuerdrücke anwachsen zu lassen.

In besonders vorteilhafter Ausgestaltung dieser Variante ist vorgesehen, dass als Steuergröße zum Vorgeben der Höhe des einzustellenden Hydraulikflüssigkeitshauptdrucks ein hydraulischer Vorsteuerdruck dient. Es ist also nicht erforderlich, eine zusätzliche elektronische Steuereinrichtung vorzusehen, welche die entsprechenden Versorgungsdrücke in elektrische Signale wandelt, welche dann als Steuergröße zum Vorgeben der Höhe des einzustellenden Hydraulikflüssigkeitshauptdrucks dienen.

Weiter ist erfindungsgemäß vorgesehen, dass als Steuergröße zum Einstellen des ersten und zweiten Versorgungsdrucks jeweils entsprechende hydraulische Vorsteuerdrücke dienen und dass der höhere der Vorsteuerdrücke der hydraulische Vorsteuerdruck für das Hauptdruckregelventil ist.

Bei einer erfindungsgemäßen hydraulischen Steuereinrichtung lässt sich dies am einfachsten dadurch realisieren, dass die Vorsteuerdrücke an den Eingängen eines Wechselventils anliegen, welches ausgangsseitig mit dem Steuereingang des Hauptdruckregelventils verbunden ist. Vorzugsweise sind die jeweiligen Vorsteuerdrücke der Druckregelventile mittels entsprechender Elektromagnetventile regelbar.

Als bevorzugte Ausführungsvariante ist erfindungsgemäß weiter vorgesehen, dass die entsprechenden Vorsteuerdrücke der Druckregelventile über eine erste Niederdruckleitung bereitgestellt werden, in welcher ein von dem Hydraulikflüssigkeitshauptdruck in der Hauptdruckleitung unabhängiger Niederdruck herrscht.

In einer besonders vorteilhaften Ausführungsvariante ist die erste Niederdruckleitung mit dem Hauptdruckregelventil verbunden.

Vorzugsweise ist ein Druckbegrenzungsventil zum Regeln des Niederdrucks vorgesehen. Das Druckbegrenzungsventil (Regelventil) sorgt für konstante Druckverhältnisse in der ersten Niederdruckleitung, so dass die geregelten Drücke der Druckregelventile keine Störungen durch wechselnden Systemdruck aufweisen.

In weiterer erfindungsgemäßer Ausgestaltung der hydraulischen Steuereinrichtung ist eine zweite Niederdruckleitung vorgesehen, welche parallel zu der ersten Niederdruckleitung geschaltet ist. In dieser zweiten Niederdruckleitung ist vorteilhafterweise ein Getriebeflüssigkeitskühler angeordnet. Stromab des Getriebeflüssigkeitskühlers ist in der zweiten Niederdruckleitung ein Druckfilter vorgesehen. Parallel zu dem Druckfilter ist ein Rückschlagventil vorgesehen. Eine Kupplungskühlflüssigkeitsversorgung ist in Reihe zu dem Getriebeflüssigkeitskühler geschaltet. Damit versorgt man die Kupplung mit Kühlflüssigkeit (diese wird in der Fachsprache als Kühlöl bezeichnet), die möglichst niedrige Temperaturen aufweist. Darüber hinaus kann der Förderstrom einer der zur Hydraulikflüssigkeitsversorgung vorgesehenen Hydropumpe gegenüber einer parallelen Anordnung minimiert werden. Die Kühlflüssigkeit wird in dem Druckfilter in einer Art Nebenstromfilterung gereinigt. Die Anfangsverschmutzung des Getriebeflüssigkeitskühlers gelangt dadurch nicht in den Hydraulikflüssigkeitskreislauf. Das Druckbegrenzungsventil (Regelventil) sorgt auch für konstante Druckverhältnisse im Kühlerkreislauf, so dass die Kühlflüssigkeit (Kühlöl) keine Störungen durch wechselnden Systemdruck aufweist.

Die Erfindung wird nunmehr anhand der Zeichnungen näher beschrieben. Es zeigt:

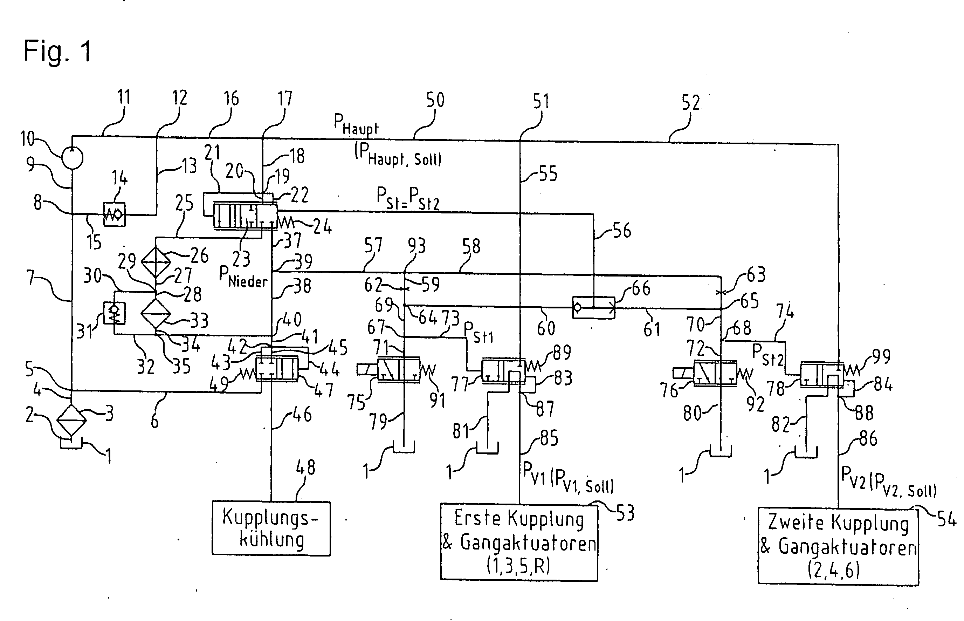

- Figur 1: ein Ausführungsbeispiel einer erfindungsgemäßen hydraulischen Steuereinrichtung für ein Doppelkupplungsgetriebe.

Die in der Figur 1 dargestellte hydraulische Steuereinrichtung für ein Doppelkupplungsgetriebe umfasst als Hauptkomponenten eine Hydropumpe 10 zur Bereitstellung einer Hydraulikflüssigkeitsversorgung, ein Hauptdruckregelventil 23 zum Regeln und Einstellen eines Hydraulikflüssigkeitshauptdrucks p_{Haupt} der von der Hydropumpe 10 bereitgestellten Hydraulikflüssigkeit in einer Hauptdruckleitung, ein erstes Druckregelventil 77 zum Einstellen eines ersten Versorgungsdrucks p_{V1} in einer ersten Versorgungsleitung für die erste Kupplung 53 des Doppelkupplungsgetriebes und für die zugehörigen Aktuatoren der ungeraden Gänge (1, 3, 5) und des Rückwärtsgangs (R) sowie ein zweites Druckregelventil 78 zum Einstellen eines zweiten Versorgungsdrucks p_{V2} in einer zweiten Versorgungsleitung für die zweite Kupplung 54 des Doppelkupplungsgetriebes und die zugehörigen Gangaktuatoren der geraden Gänge (2, 4 und 6). Weiterhin ist ein Getriebeflüssigkeitskühler 26 an sich bekannter Art sowie eine Kupplungsflüssigkeitsversorgung 48 vorgesehen, welche die zur Kühlung der Kupplungen 53, 54 der Doppelkupplung vorgesehene Kühlflüssigkeit (Kühlöl) bereitstellt.

Die Einzelkomponenten der erfindungsgemäßen hydraulischen Steuereinrichtung sind in der nachfolgend beschriebenen Weise miteinander verbunden:

Von einem offenen Hydraulikflüssigkeitsbehälter 1 wird Hydraulikflüssigkeit bereitgestellt. Eine Durchflussleitung 2, dessen Rohrende unterhalb des Hydraulikflüssigkeitsspiegels im Hydraulikflüssigkeitsbehälter 1 liegt, ist mit einem Filter 3 verbunden. Von dort führt eine Durchflussleitung 4, 7, 9 zur Hydropumpe 10. Am Ausgang der Hydropumpe 10 schließt sich eine Hauptdruckleitung an, welche durch die Durchflussleitungen 11, 17, 18, 50, 55, 52 gebildet ist. Parallel zur Hydropumpe 10 ist ein Druckbegrenzer (Rückschlagventil) 14 vorgesehen, welches den Hauptdruck p_{Haupt} auf einen Maximalwert begrenzt. Die zugehörigen Durchflussleitungen sind mit den Bezugszeichen 13 und 15 gekennzeichnet, die Leitungsverbindungen mit den Bezugszeichen 8 und 12.

Das Hauptdruckregelventil 23 ist im vorliegenden Ausführungsbeispiel als 4/3-Wege-Druckbegrenzungsventil ausgeführt. Andere Ausführungsvarianten sind jedoch denkbar.

Der Sollwert für den Hauptdruck p_{Haupt,Soll} wird durch einen Druck p_{St} an einem Steuereingang des Hauptdruckregelventils 23 und die Federkraft einer Rückstellfeder 24 vorgegeben. Die Regelstrecke wird durch die Leitung 21 gebildet.

Beide Eingänge des Hauptdruckregelventils 23 sind über die Durchflussleitungen 20 und 22 über eine Leitungsverbindung 19 mit der Hauptdruckleitung 11, 16, 18, 50, 55, 52 verbunden.

Die Hauptdruckleitung 11, 16, 18, 50, 55, 52 umfasst zwei Pfade, welche zu den Versorgungsleitungen der Kupplungen und Gangaktuatoren 53, 54 führen. Diese Pfade sind in der Figur 1 mit den Bezugszeichen 52 und 55 gekennzeichnet.

Die mittels dieser Druckregelventile 77, 78 in den Versorgungsleitungen beiden Druckregelventile 77, 78 sind im vorliegenden Ausführungsbeispiel als 3/2-Wege-Ventile ausgebildet.

Die einzustellenden Sollwerte p_{V1,Soll}, p_{V2,Soll} werden über die am jeweiligen Steuereingang anliegenden Vorsteuerdrücke p_{St1}, p_{St2} und die Federkraft der jeweiligen Rückstellfedern 89, 99 vorgegeben. Die jeweiligen Regelstrecken werden durch die Leitungen 83 und 84 gebildet.

Der Eingang des ersten Druckregelventils 77 ist über die Durchflussleitung 55 an der Leitungsverbindung 51 mit der Hauptdruckleitung 11, 16, 18, 50, 55, 52 verbunden. In entsprechender Weise ist der Eingang des zweiten Druckregelventils 78 über die an der Leitungsverbindung 51 angeschlossene Durchflussleitung 52 mit der Hauptdruckleitung 11, 16, 18, 50, 55 verbunden.

Jeweils einer der beiden Ausgänge der beiden Druckregelventile 77, 78 ist über eine entsprechende Durchflussleitung 81, 82 mit dem offenen Hydraulikflüssigkeitsbehälter 1 verbunden. Jeweils der andere der beiden Ausgänge ist mit der jeweiligen Versorgungsleitung 85, 86 der beiden Kupplungen und zugehörigen Gangaktuatoren 53, 54 verbunden.

Den beiden Druckregelventilen 77, 78 ist jeweils ein Vorsteuerventil 75, 76 zugeordnet, welche jeweils die Vorsteuerdrücke p_{St1}, p_{St2} ausgeben, welche (zusammen mit der jeweiligen Federkraft der Rückstellfedern 89, 99) die Sollwerte p_{V1,Soll}, p_{V2,Soll} für die in den Versorgungsleitungen 85, 86 einzustellenden Versorgungsdrücke p_{V1,} p_{V2} vorgeben.

Die beiden Vorsteuerventile 75, 76 sind im vorliegenden Ausführungsbeispiel als 2/2-Wege-Ventile ausgebildet. Es handelt sich dabei um Magnetventile, welche entgegen der Rückstellkraft entsprechender Rückstellfedern 91, 92 betätigt werden.

Die von diesen beiden Vorsteuerventilen 75, 76 geregelten Vorsteuerdrücke p_{St1}, p_{St2} für die Druckregelventile 77, 78 werden im vorliegenden Ausführungsbeispiel von einer Niederdruckleitung 37, 38, 41, 57, 58, 59 bereitgestellt, in welcher ein von der Hauptdruckleitung unabhängiger Niederdruck p_{Nieder} herrscht-Zu diesem Zweck sind die jeweiligen Eingänge der Vorsteuerventile 75, 76 über entsprechende viskositätsstabile Drosselungen 62, 63 mit dieser Niederdruckleitung 37, 38, 41, 57, 58 verbunden (Leitungsverbindung 93, Durchflussleitungen 69, 71, 70, 7.2). Diese Durchflussleitungen 69, 71 bzw. 70, 72 sind wiederum mit Steuereingängen der jeweiligen Druckregelventile 76, 77 über die Steuerleitungen 73 bzw. 74 verbunden (Leitungsverbindung 67, 68).

Die jeweilige Einstellung eines Vorsteuerdrucks p_{St1}, p_{St2} wird dadurch ermöglicht, dass die Vorsteuerventile 75, 76 ausgangsseitig über Durchflussleitungen 79, 80 mit dem offenen Hydraulikflüssigkeitsbehälter 1 verbunden sind, über welche der jeweilige Vorsteuerdruck p_{St1}, p_{St2} abregelbar ist.

Die erste Niederdruckleitung 37, 38, 41 ist mit einem der Ausgänge des Hauptdruckregelventils 23 verbunden. Über diesen Ausgang des Hauptdruckregelventils 23 wird diese Niederdruckleitung 37, 38, 41 gespeist.

Zum Einstellen des Druckniveaus p_{Nieder} im ersten Niederdruckkreis 37, 38, 41 ist ein Druckregelventil/Druckbegrenzungsventil 47 vorgesehen. Dieses Druckbegrenzungsventil 47 ist im vorliegenden Ausführungsbeispiel als 4/2-Wege-Ventil ausgeführt.

Der einzustellende Sollwert des Niederdrucks p_{Nieder,Soll} wird durch die Federkraft einer Rückstellfeder 49 vorgegeben. Die Regelstrecke wird durch die Leitung 44 gebildet, welche auf einen Steuereingang des Druckbegrenzungsventils 47 geführt ist.

Die beiden Eingänge des 4/2-Wege-Ventils sind über entsprechende Durchflussleitungen 43, 45 mit dem der ersten Niederdruckleitung 37, 38, 41 am Knoten 42 verbunden.

Einer der Ausgänge des 4/2-Wege-Ventils 47 ist über eine Durchflussleitung 6 an einer Leitungsverbindung 5 mit der zum Filter 3 bzw. zur Hydropumpe 10 führenden Durchflussleitung 4, 7, 9 verbunden.

Das Druckbegrenzungs-/Druckregelventil 47 sorgt für konstante Druckverhältnisse in der ersten Niederdruckleitung 37, 38, 41, 57, 58. Auf diese Weise wird verhindert, dass die geregelten Vorsteuerdrücke p_{St1}, p_{St2} für die beiden Druckregelventile 77, 78 Störungen durch einen wechselnden Hauptdruck p_{Haupt} unterworfen sind.

Die beiden Druckregelventile 77, 78 sind unabhängig voneinander regelbar. Darüber hinaus sind beide Druckregelventile 77, 78 derart ausgebildet, dass sie die jeweiligen korrespondierenden Versorgungsleitungen 85, 86 drucklos schalten können. Zu diesem Zweck ist im vorliegenden Ausführungsbeispiel der jeweilige zweite Ausgang der als 3/2-Wege-Ventile ausgebildeten Druckregelventile 77, 78 über entsprechende Durchflussleitungen 81, 82 mit dem offenen Behälter 1 verbunden. In den in der Figur 1 dargestellten Ventilstellungen werden die entsprechenden Versorgungsleitungen 85, 86 drucklos geschaltet, indem eine Verbindung über die jeweiligen Ausgänge der entsprechenden Druckregelventile 77, 78 zwischen den Durchflussleitungen 81 und 85 bzw. 82 und 86 hergestellt wird. Diese ermöglicht einen Abfluss der in den jeweiligen Versorgungsleitungen 85, 86 vorhandenen Hydraulikflüssigkeit in den offenen Hydraulikflüssigkeitsbehälter 1.

Im vorliegenden Ausführungsbeispiel sind die beiden Vorsteuerdruckleitungen 69, 71, 73 bzw. 70, 72, 74 über entsprechende Leitungen 60, 61 und Leitungsverbindungen 64, 65 mit den beiden Eingängen eines Wechselventils 66 verbunden. Der Ausgang des Wechselventils 66 ist über eine Steuerleitung 56 mit dem vorstehend erwähnten Steuereingang für den Druck p_{St} des Hauptdruckregelventils 23 verbunden.

Je nachdem, welcher Vorsteuerdruck p_{St1} oder p_{St2} größer ist, wird über das Wechselventil 66 eine Verbindung von der Vorsteuerleitung 69, 71, 73, 60 bzw. 70, 72, 74, 61 der beiden Druckregelventile 77, 78 über das Wechselventil 66 zur Steuerleitung 56 und damit zum vorerwähnten Steuereingang des Hauptdruckregelventils 23 hergestellt. Auf diese Weise wird der Sollwert des Hydraulikflüssigkeitshauptdrucks p_{Haupt,Soll} von dem größeren der beiden Vorsteuerdrücke p_{St1}, p_{St2} vorgegeben.

In dem in der Figur 1 dargestellten Fall ist der Vorsteuerdruck p_{St2} des zweiten Druckregelventils 78 größer als der Vorsteuerdruck p_{St1} des ersten Druckregelventils 77. Der Vorsteuerdruck p_{St2} des zweiten Druckregelventils 78 wird daher zum Vorsteuerdruck p_{St} des Hauptdruckregelventils 23, auf Grund dessen die Höhe des einzustellenden Hydraulikflüssigkeitshauptdrucks p_{Haupt,Soll} vorgegeben ist.

Beim Ausführungsbeispiel gemäß der Figur 1 ist eine zweite Niederdruckleitung 25, 27, 28, 34, 36 vorgesehen, welche parallel zur ersten Niederdruckleitung 37, 38 über die Leitungsverbindung geschaltet ist. Diese zweite Niederdruckleitung 25, 27, 28, 34 ist mit dem zweiten Ausgang des Hauptdruckregelventils 23 verbunden. In diesen zweiten Niederdruckkreis 25, 27, 34, 36 ist ein Getriebeflüssigkeitskühler 26 eingebaut. Diesem Getriebeflüssigkeitskühler 26 ist ein Druckfilter 33 nachgeschaltet.

Um zu verhindern, dass bei verstopftem Filter 33 kein Durchfluss durch den Getriebeflüssigkeitskühler 26 mehr möglich ist, ist dem Filter 33 ein Überdruckventil 31 über die Anschlüsse 32, 30, 29, 35 parallel geschaltet.

Am zweiten Ausgang des Druckbegrenzungsventils 47 ist über eine Durchflussleitung 46 eine Kupplungskühlflüssigkeitsversorgung 48 angeschlossen. Auf diese Weise sind Getriebeflüssigkeitskühler 26 und Kupplungskühlflüssigkeitsversorgung 48 in Reihe geschaltet. Dadurch wird die Doppelkupplung mit Kühlflüssigkeit (Kühlöl) versorgt, welches eine vergleichsweise niedrige Temperatur aufweist. Darüber hinaus kann der Pumpenförderstrom der Hydropumpe 10 gegenüber einer parallelen Anordnung minimiert werden. Der Druckfilter 33, welcher sich stromab des Getriebeflüssigkeitskühlers 26 befindet, reinigt die Kühlflüssigkeit (Kühlöl) in einer Art Nebenstromfilterung und verhindert, dass die Anfangsverschmutzung des Getriebeflüssigkeitskühlers 26 in den Hydraulikkreislauf gelangt.

### Bezugszeichenliste

- 1: offener Hydraulikflüssigkeitsbehälter
- 2: Rohrende unterhalb Hydraulikflüssigkeitsspiegel
- 3: Filter
- 4: Durchflussleitung
- 5: Leitungsverbindung
- 6: Durchflussleitung
- 7: Durchflussleitung
- 8: Leitungsverbindung
- 9: Durchflussleitung
- 10: Hydropumpe
- 11: Durchflussleitung
- 12: Leitungsverbindung
- 13: Durchflussleitung
- 14: Druckbegrenzer (Rückschlagventil)
- 15: Durchflussleitung
- 16: Durchflussleitung
- 17: Leitungsverbindung
- 18: Durchflussleitung
- 19: Leitungsverbindung
- 20: Durchflussleitung
- 21: Steuerleitung
- 22: Steuerleitung
- 23: Hauptdruckregelventil (4/3-Wege-Druckbegrenzungsventil)
- 24: Rückholfeder
- 25: Durchflussleitung
- 26: Getriebeflüssigkeitskühler
- 27: Durchflussleitung
- 28: Durchflussleitung
- 29: Leitungsverbindung
- 30: Durchflussleitung
- 31: Überdruckventil
- 32: Durchflussleitung
- 33: Druckfilter
- 34: Durchflussleitung
- 35: Leitungsverbindung
- 36: Durchflussleitung
- 37: Bypassdurchflussleitung
- 38: Bypassdurchflussleitung
- 39: Leitungsverbindung
- 40: Leitungsverbindung
- 41: Durchflussleitung
- 42: Leitungsverbindung.
- 43: Durchflussleitung
- 44: Steuerleitung
- 45: Durchflussleitung
- 46: Durchflussleitung
- 47: Druckbegrenzungs-/Regelventil (4/2-Wege-Ventil)
- 48: Kupplungskühlflüssigkeitsversorgungssystem
- 49: Rückholfeder
- 50: Durchflussleitung
- 51: Leitungsverbindung
- 52: Durchflussleitung
- 53: Kupplung und Gangsteller einer ersten Getriebeeingangswelle
- 54: Kupplung und Gangsteller einer zweiten Getriebeeingangswelle
- 55: Durchflussleitung
- 56: Steuerleitung
- 57: Steuerleitung
- 58: Steuerleitung
- 59: Steuerleitung
- 60: Steuerleitung
- 61: Steuerleitung
- 62: viskositätsstabile Drosselung
- 63: viskositätsstabile Drosselung
- 64: Leitungsverbindung
- 65: Leitungsverbindung
- 66: Wechselventil
- 67: Leitungsverbindung
- 68: Leitungsverbindung
- 69: Steuerleitung
- 70: Steuerleitung
- 71: Steuerleitung
- 72: Steuerleitung
- 73: Steuerleitung
- 74: Steuerleitung
- 75: erstes Vorsteuerventil (durch Elektromagneten gegen eine Rückholfeder betätigtes 2/2-Wege-Ventil)
- 76: zweites Vorsteuerventil (durch Elektromagneten gegen eine Rückholfeder betätigtes 2/2-Wege-Ventil)
- 77: erstes Druckregelventil (druckbetätigtes 3/2-WegeVentil)
- 78: zweites Druckregelventil (druckbetätigtes 3/2-WegeVentil)
- 79: Durchflussleitung
- 80: Durchflussleitung
- 81: Durchflussleitung
- 82: Durchflussleitung
- 83: Steuerleitung
- 84: Steuerleitung
- 85: Durchflussleitung
- 86: Durchflussleitung
- 87: Leitungsverbindung
- 88: Leitungsverbindung
- 89: Rückholfeder
- 90: Rückholfeder
- 91: Rückholfeder
- 92: Rückholfeder
- 93: Leitungsverbindung

- p_{Haupt}: Hauptdruck
- p_{Haupt,Soll}: Sollwert des Hauptdrucks
- P_{Nieder}: Niederdruck
- P_{Nieder,Soll}: Sollwert des Niederdrucks
- p_{V1}: erster Versorgungsdruck
- P_{V1,Soll}: Sollwert des ersten Versorgungsdrucks
- p_{V2}: zweiter Versorgungsdruck
- p_{V2,Soll}: Sollwert des zweiten Versorgungsdrucks
- P_{St}: Vorsteuerdruck des Hauptdruckregelventils 23
- p_{St1}: Vorsteuerdruck des ersten Druckregelventils 77
- P_{St2}: Vorsteuerdruck des zweiten Druckregelventils 78

## Patentansprüche

1. Hydraulische Steuereinrichtung für ein Doppelkupplungsgetriebe,
- mit einem Hauptdruckregelventil (23) zum Einstellen eines Hydraulikflüssigkeitshauptdrucks (p_{Haupt}) in einer Hauptdruckleitung (11, 16, 18, 50, 55, 52)
- mit einem eingangsseitig mit der Hauptdruckleitung (11, 16, 18, 50, 55, 52) und ausgangsseitig mit einer ersten Versorgungsleitung (85) für eine erste Kupplung (53) und gegebenenfalls zugehörige Gangaktuatoren verbundenen ersten Druckregelventil (77) zum Einstellen eines ersten Versorgungsdrucks (p_{V1}) in der ersten Versorgungsleitung (85)
- mit einem eingangsseitig mit der Hauptdruckleitung (11, 16, 18, 50, 55, 52) und ausgangsseitig mit einer zweiten Versorgungsleitung (86) für eine zweite Kupplung (54) und gegebenenfalls zugehörige Gangaktuatoren verbundenen zweiten Druckregelventil (78) zum Einstellen eines zweiten Versorgungsdrucks (p_{V2}) in der zweiten Versorgungsleitung (86),
**dadurch gekennzeichnet, dass**
- einem Steuereingang des Hauptdruckregelventils (23) ein von wenigstens einem der Versorgungsdrücke (p_{V1}, p_{V2}) abhängiges Steuersignal (p_{St}) zuführbar ist, welches die Höhe des einzustellenden Hydraulikflüssigkeitshauptdrucks (P_{Haupt,Soll}) vorgibt.

2. Hydraulische Steuereinrichtung nach Anspruch 1,
**dadurch gekennzeichnet, dass** das Steuersignal (p_{St}) von dem größeren der beiden Versorgungsdrücke (p_{V1}, p_{V2}) abhängt.

3. Hydraulische Steuereinrichtung nach Anspruch 2,
**dadurch gekennzeichnet, dass** die Größe des Steuersignals (p_{St}) proportional mit dem größeren der beiden Versorgungsdrücke (p_{V1}, p_{V2}) zunimmt.

4. Hydraulische Steuereinrichtung nach Anspruch 3,
**dadurch gekennzeichnet, dass** die Höhe des einzustellenden Hydraulikflüssigkeitshauptdrucks (p_{Haupt,Soll}) proportional mit der Größe des Steuersignals (P_{St}) zunimmt.

5. Hydraulische Steuereinrichtung nach Anspruch 4,
**dadurch gekennzeichnet, dass** das Steuersignal (p_{St}) ein hydraulischer Vorsteuerdruck (p_{St}) ist.

6. Hydraulische Steuereinrichtung nach Anspruch 5,
**dadurch gekennzeichnet, dass** die jeweilige Höhe der jeweiligen Versorgungsdrücke (p_{V1,Soll}, p_{V2,Soll}) mittels entsprechender hydraulischer Vorsteuerdrücke (p_{St1}, p_{St2}) für die Druckregelventile (77, 78) einstellbar ist und dass der höhere der Vorsteuerdrücke (p_{St1}, p_{St2}) der hydraulische Vorsteuerdruck (p_{St}) für das Hauptdruckregelventil (23) ist.

7. Hydraulische Steuereinrichtung nach Anspruch 6,
**dadurch gekennzeichnet, dass** die Vorsteuerdrücke (p_{St1}, p_{St2}) an den Eingängen eines Wechselventils (66) anliegen, welches ausgangsseitig mit dem Steuereingang des Hauptdruckregelventils (23) verbunden ist.

8. Hydraulische Steuereinrichtung nach Anspruch 6 oder 7,
**dadurch gekennzeichnet, dass** die jeweiligen Vorsteuerdrücke (p_{St1}, p_{St2}) der Druckregelventile (77, 78) mittels entsprechender Elektromagnetventile (75, 76) regelbar sind.

9. Hydraulische Steuereinrichtung nach einem der Ansprüche 6 bis 8,
**dadurch gekennzeichnet, dass** die entsprechenden Vorsteuerdrücke (p_{St1}, p_{St2}) der Regelventile (77, 78) über eine erste Niederdruckleitung (37, 38, 41, 57, 58) bereitgestellt werden, in welcher ein von dem Hydraulikflüssigkeitshauptdruck (p_{Haupt}) in der Hauptdruckleitung (11, 16, 18, 50, 55, 52) unabhängiger Niederdruck (p_{Nieder}) herrscht.

10. Hydraulische Steuereinrichtung nach Anspruch 9,
**dadurch gekennzeichnet, dass** ein Druckbegrenzungsventil (47) zum Regeln des Niederdrucks (p_{Nieder}) vorgesehen ist.

11. Hydraulische Steuereinrichtung nach Anspruch 9 oder 10,
**dadurch gekennzeichnet, dass** die erste Niederdruckleitung (37, 38, 41, 57, 58) mit dem Hauptdruckregelventil (23) verbunden ist.

12. Hydraulische Steuereinrichtung nach einem der Ansprüche 8 bis 11,
**dadurch gekennzeichnet, dass** eine zweite Niederdruckleitung (25, 27, 28, 30, 32, 34, 36) vorgesehen ist, welche parallel zu der ersten Niederdruckleitung (37, 38, 41, 57, 58) geschaltet ist.

13. Hydraulische Steuereinrichtung nach Anspruch 12,
**dadurch gekennzeichnet, dass** in der zweiten Niederdruckleitung (25, 27, 28, 30, 32, 34, 36) ein Getriebeflüssigkeitskühler (26) angeordnet ist.

14. Hydraulische Steuereinrichtung nach Anspruch 13,
**dadurch gekennzeichnet, dass** stromab des Getriebeflüssigkeitskuhlers (26) in der zweiten Niederdruckleitung (25, 27, 30, 32, 34, 36) ein Druckfilter (33) vorgesehen ist.

15. Hydraulische Steuereinrichtung nach Anspruch 14,
**dadurch gekennzeichnet, dass** parallel zu dem Druckfilter (33) ein Rückschlagventil (31) vorgesehen ist.

16. Hydraulische Steuereinrichtung nach einem der Ansprüche 13 bis 15,
**dadurch gekennzeichnet, dass** eine Kupplungskühlflüssigkeitsversorgung (48) in Reihe zu dem Getriebeflüssigkeitskühler (26) geschaltet ist.

17. Verfahren zum hydraulischen Ansteuern eines Doppelkupplungsgetriebes, bei dem
- in einer Hauptdruckleitung (11, 16, 18, 50, 55, 52) ein Hydraulikflüssigkeitshauptdruck (p_{Haupt}) eingestellt wird und
- in einer zu einer ersten Kupplung (53) und gegebenenfalls zugehörigen Gangaktuatoren führenden Versorgungsleitung (85) ein erster Versorgungsdruck (p_{V1}) eingestellt wird
- in einer zu einer zweiten Kupplung (54) und gegebenenfalls zugehörigen Gangaktuatoren führenden Versorgungsleitung (86) ein zweiter Versorgungsdruck (p_{V2}) eingestellt wird,
**dadurch gekennzeichnet, dass**
- die Höhe des einzustellenden Hydraulikflüssigkeitshauptdrucks (p_{Haupt,Soll}) von wenigstens einem der Versorgungsdrücke (p_{V1}, p_{V2}) vorgegeben wird.

18. Verfahren nach Anspruch 17,
**dadurch gekennzeichnet, dass** die Höhe des einzustellenden Hydraulikflüssigkeitshauptdrucks (p_{Haupt,Soll}) von dem größeren der beiden Versorgungsdrücke (p_{V1}, p_{V2}) vorgegeben wird.

19. Verfahren nach Anspruch 18,
**dadurch gekennzeichnet, dass** die Höhe des einzustellenden Hydraulikflüssigkeitshauptdrucks. (p_{Haupt,Soll}) mit dem größeren der beiden Versorgungsdrücke (p_{V1}, p_{V2}) zunehmend vorgegeben wird.

20. Verfahren nach Anspruch 19,
**dadurch gekennzeichnet, dass** die Höhe des einzustellenden Hydraulikflüssigkeitshauptdrucks (p_{Haupt,Soll}) proportional zum größeren der beiden Versorgungsdrücke (p_{V1}, p_{V2}) vorgegeben wird.

21. Verfahren nach Anspruch 20,
**dadurch gekennzeichnet, dass** als Steuergröße zum Vorgeben der Höhe der einzustellenden Hydraulikflüssigkeitshauptdrucks (p_{Haupt,Soll}) ein hydraulischer Vorsteuerdruck (p_{St}) dient.

22. Verfahren nach Anspruch 21,
**dadurch gekennzeichnet, dass** als Steuergröße zum Einstellen des ersten und zweiten Versorgungsdrucks (p_{V1}, p_{V2}) jeweils entsprechende hydraulische Vorsteuerdrücke (p_{St1}, p_{St2}) von Druckregelventilen (77, 78) dienen, welche zum Einstellen der Versorgungsdrücke (p_{V1}, p_{V2}) vorgesehen sind und dass der höhere der Vorsteuerdrücke (p_{St1}, p_{St2}) der hydraulische Vorsteuerdruck (p_{St}). zum Vorgeben der Höhe des einzustellenden Hydraulikflüssigkeitshauptdrucks (P_{Haupt,Soll}) ist.

23. Verfahren nach Anspruch 22,
**dadurch gekennzeichnet, dass** die entsprechenden Vorsteuerdrücke (p_{St1}, p_{St2}) der Druckregelventile (77, 78) über eine erste Niederdruckleitung (37, 38, 41, 57, 58) bereitgestellt werden, in welcher ein von dem Hydraulikflüssigkeitshauptdruck (p_{Haupt}) unabhängiger Niederdruck (p_{Nieder}) herrscht.

## Claims

1. Hydraulic control device for a twin-clutch transmission,
- having a main pressure control valve (23) for adjusting a hydraulic fluid main pressure (p_{Haupt}) in a main pressure line (11, 16, 18, 50, 55, 52)
- having a first pressure control valve (77), which is connected at the input side to the main pressure line (11, 16, 18, 50, 55, 52) and at the output side to a first supply line (85) for a first clutch (53) and optionally associated gear actuators, for adjusting a first supply pressure (p_{V1}) in the first supply line (85)
- having a second pressure control valve (78), which is connected at the input side to the main pressure line (11, 16, 18, 50, 55, 52) and at the output side to a second supply line (86) for a second clutch (54) and optionally associated gear actuators, for adjusting a second supply pressure (p_{V2}) in the second supply line (86),
**characterized in that**
- to a control input of the main pressure control valve (23) there may be supplied a control signal (p_{St}), which is dependent upon at least one of the supply pressures (p_{V1}, p_{V2}) and which defines the level of the hydraulic fluid main pressure (p_{Haupt,Soll}) that is to be adjusted.

2. Hydraulic control device according to claim 1,
**characterized in that** the control signal (p_{St}) depends upon the greater of the two supply pressures (p_{V1}, p_{V2}).

3. Hydraulic control device according to claim 2, **chracterized in that** the magnitude of the control signal (p_{St}) increases in proportion to the greater of the two supply pressures (p_{V1}, pᵥ₂).

4. Hydraulic control device according to claim 3,
**characterized in that** the level of the hydraulic fluid main pressure (p_{Haupt,Soll}) that is to be adjusted increases in proportion to the magnitude of the control signal (p_{St}).

5. Hydraulic control device according to claim 4,
**characterized in that** the control signal (p_{St}) is a hydraulic pilot pressure (p_{St}).

6. Hydraulic control device according to claim 5,
**characterized in that** the respective level of the respective supply pressures (P_{V1,Soll}, P_{V2,Soll}) is adjustable by means of corresponding hydraulic pilot pressures (P_{St1}, p_{St2}) for the pressure control valves (77, 78) and that the higher of the pilot pressures (p_{St1}, p_{St2}) is the hydraulic pilot pressure (p_{St}) for the main pressure control valve (23).

7. Hydraulic control device according to claim 6,
**characterized in that** the pilot pressures (p_{St1}, P_{St2}) lie across the inputs of a change-over valve (66), which is connected at the output side to the control input of the main pressure control valve (23).

8. Hydraulic control device according to claim 6 or 7,
**characterized in that** the respective pilot pressures (p_{St1}, p_{St2}) of the pressure control valves (77, 78) are controllable by means of corresponding solenoid valves (75, 76).

9. Hydraulic control device according to one of claims 6 to 8,
**characterized in that** the corresponding pilot pressures (p_{St1}, p_{St2}) of the control valves (77, 78) are made available through a first low-pressure: line (37, 38, 41, 57, 58), in which there prevails a low pressure (PNieder) that is independent of the hydraulic fluid main pressure (p_{Haupt}) in the main pressure line (11, 16, 18, 50, 55, 52)

10. Hydraulic control device according to claim 9,
**characterized in that** a pressure-limiting valve (47) is provided for controlling the low pressure (p_{Nieder}).

11. Hydraulic control device according to claim 9 or 10,
**characterized in that** the first low-pressure line (37, 38, 41, 57, 58) is connected to the main pressure control valve (23).

12. Hydraulic control device according to one of claims 8 to 11,
**characterized in that** a second low-pressure line (25, 27, 28, 30, 32, 34, 36) is provided, which is connected in parallel to the first low-pressure line (37, 38, 41, 57, 58).

13. Hydraulic control device according to claim 12,
**characterized in that** a transmission fluid cooler (26) is disposed in the second low-pressure line (25, 27, 28, 30, 32, 34, 36).

14. Hydraulic control device according to claim 13,
**characterized in that** a pressure filter (33) is provided downstream of the transmission fluid cooler (26) in the second low-pressure line (25, 27, 28, 30, 32, 34, 36).

15. Hydraulic control device according to claim 14,
**characterized in that** a non-return valve (31) is provided parallel to the pressure filter (33).

16. Hydraulic control device according to one of claims 13 to 15,
**characterized in that** a clutch cooling fluid supply (48) is serially connected to the transmission fluid cooler (26).

17. Method of hydraulically controlling a twin-clutch transmission, whereby
- in a main pressure line (11, 16, 18, 50, 55, 52) a hydraulic fluid main pressure (p_{Haupt}) is adjusted and
- in a supply line (85) leading to a first clutch (53) and optionally associated gear actuators a first supply pressure (p_{V1}) is adjusted
- in a supply line (86) leading to a second clutch (54) and optionally associated gear actuators a second supply pressure (p_{V2}) is adjusted,
**characterized in that**
- the level of the hydraulic fluid main pressure (p_{Haupt,Soll}) that is to be adjusted is defined by at least one of the supply pressures (p_{V1}, p_{V2}).

18. Method according to claim 17,
**characterized in that** the level of the hydraulic fluid main pressure (p_{Haupt,Soll}) that is to be adjusted is defined by the greater of the two supply pressures (p_{V1}, p_{V2}).

19. Method according to claim 18,
**characterized in that** the level of the hydraulic fluid main pressure (p_{Haupt,}Sₒₗₗ) that is to be adjusted is increasingly defined by the greater of the two supply pressures (p_{V1}, p_{V2}).

20. Method according to claim 19,
**characterized in that** the level of the hydraulic fluid main pressure (p_{Haupt,Soll}) that is to be adjusted is defined in proportion to the greater of the two supply pressures (p_{V1}, p_{V2}).

21. Method according to claim 20,
**characterized in that** as a controlled variable for defining the level of the hydraulic fluid main pressure (p_{Haupt,Soll}) that is to be adjusted, a hydraulic pilot pressure (p_{St}) is used.

22. Method according to claim 21,
**characterized in that** as a controlled variable for adjusting the first and second supply pressures (p_{V1}, p_{V2}), in each case corresponding pilot pressures (p_{St1}, p_{St2}) of pressure control valves (77, 78) are used, which are provided for adjusting the supply pressures (p_{V1}, p_{V2}), and that the higher of the pilot pressures (p_{St1}, p_{St2}) is the hydraulic pilot pressure (p_{St}) for defining the level of the hydraulic fluid main pressure (p_{Haupt,Soll}) that is to be adjusted.

23. Method according to claim 22,
**characterized in that** the corresponding pilot pressures (p_{St1}, p_{St2}) of the pressure control valves (77, 78) are made available through a first low-pressure line (37, 38, 41, 57, 58), in which there prevails a low pressure (p_{Nieder}) that is independent of the hydraulic fluid main pressure (p_{Haupt}).

## Revendications

1. Dispositif de commande hydraulique pour une transmission à double embrayage,
- avec une soupape de régulation de pression principale (23) pour régler une pression principale de liquide hydraulique (p_{principale}) dans une conduite de pression principale (11, 16, 18, 50, 55, 52),
- avec une soupape de régulation (77) reliée, côté entrée, à la conduite de pression principale (11, 16, 18, 50, 55, 52) et, côté sortie, à une première conduite d'alimentation (85) pour un premier embrayage (53) et, le cas échéant, relié a des actionneurs de vitesse afférents, pour régler une première pression d'alimentation (p_{V1}) dans la première conduite d'alimentation (85),
- avec une deuxième soupape de régulation de pression (78) reliée, côté entrée, à la conduite de pression principale (11, 16, 18, 50, 55, 52) et, côté sortie, à une deuxième conduite d'alimentation (86) pour un deuxième embrayage (54) et, le cas échéant, des actionneurs de vitesse afférents, pour régler une deuxième pression d'alimentation (p_{V2}) dans la deuxième conduite d'alimentation (86),
**caractérisé en ce que**
- à une entrée de commande de la soupape de régulation de pression principale (23) peut être amenée un signal de commande (p_{St}), dépendant d'au moins l'une des pressions d'alimentation (pᵥ₁, pᵥ₂), signal de commande prédéterminant la valeur de la pression principale de liquide hydraulique (p_{principal,consigne}) à régler.

2. Dispositif de commande hydraulique selon la revendication 1, **caractérisé en ce que** le signal de commande (p_{St}) dépend de la plus grande des deux pressions d'alimentation (p_{V1} p_{V2}).

3. Dispositif de commande hydraulique selon la revendication 2, **caractérisé en ce que** la valeur du signal de commande (p_{St}) augmente proportionnellement à la plus grande des deux pressions d'alimentation (p_{V1}, p_{V2}).

4. Dispositif de commande hydraulique selon la revendication 3, **caractérisé en ce que** la valeur de la pression principale de liquide hydraulique (p_{principal,consigne}) à régler augmente proportionnellement à la valeur du signal de commande (p_{St}).

5. Dispositif de commande hydraulique selon la revendication 4, **caractérisé en ce que** le signal de commande (p_{St}) est une pression de pilotage hydraulique (p_{St}).

6. Dispositif de commande hydraulique selon la revendication 5, **caractérisé en ce que** la valeur respective des pressions d'alimentation (p_{V1,consigne}, p_{V2,consigne}) respective est réglable, au moyen de pressions de pilotage (p_{St1}, p_{St2}) hydraulique correspondantes, pour les soupapes de régulation de pression (77, 78), et **en ce que** la plus grande des pressions de pilotage (p_{St1,} p_{St2}) est la pression de pilotage hydraulique (p_{St}) pour la soupape de régulation principale (23).

7. Dispositif de commande hydraulique selon la revendication 6, **caractérisé en ce que** les pressions de pilotage (p_{St1}, p_{St2}) sont appliquées aux entrées d'une soupape à deux voies (66) reliée, côté sortie, à l'entrée de commande de la soupape de régulation de pression principale (23).

8. Dispositif de commande hydraulique selon la revendication 6 ou 7, **caractérisé en ce que** les pressions de pilotage (p_{St1}, p_{St2}) respectives des soupapes de régulation de pression (77, 78) sont réglables à l'aide d'électrovannes (75, 76) correspondantes.

9. Dispositif de commande hydraulique selon l'une des revendications 6 à 8, **caractérisé en ce que** les pressions de pilotage (p_{St1}, P_{St2}) correspondantes des soupapes de régulation (77, 68) sont fournies par une première conduite basse pression (37, 38, 41, 57, 58), dans laquelle règne une basse pression (p_{basse}), indépendante de la pression principale de liquide hydraulique (p_{principale}) dans la conduite de pression principale (11, 16, 18, 50, 55, 52).

10. Dispositif de commande hydraulique selon la revendication 9, **caractérisé en ce qu'**une soupape de limitation de pression (47) est prévue pour réguler la basse pression (p_{basse}).

11. Dispositif de commande hydraulique selon la revendication 9 ou 10, **caractérisé en ce que** la première conduite basse pression (37, 38, 41, 57, 58) est reliée à la soupape de régulation de pression principale (23).

12. Dispositif de commande hydraulique selon les revendications 8 à 11, **caractérisé en ce qu'**une deuxième conduite basse pression (25, 27, 28, 30, 32, 34, 36) est prévue, branchée parallèlement à la première conduite basse pression (37, 38, 41, 57, 58).

13. Dispositif de commande hydraulique selon la revendication 12, **caractérisé en ce qu'**un refroidisseur de liquide de transmission (26) est disposé dans la deuxième conduite basse pression (25, 27, 28, 30, 32, 34, 36).

14. Dispositif de commande hydraulique selon la revendication 13, **caractérisé en ce qu'**un filtre à pression (33) est prévu, en aval du refroidisseur à liquide de transmission (26), dans la deuxième conduite basse pression (25, 27, 28, 30, 32, 34, 36).

15. Dispositif de commande hydraulique selon la revendication 14, **caractérisé en ce qu'**un clapet anti-retour (31) est prévu, parallèlement au filtre à pression (33).

16. Dispositif de commande hydraulique selon l'une des revendications 13 à 15, **caractérisé en ce que en ce qu'**un dispositif d'alimentation en liquide de refroidissement d'embrayage (48) est branché en série vis-à-vis du refroidisseur à liquide de transmission (26).

17. Procédé de commande hydraulique d'une transmission à double embrayage, dans lequel :
- dans une conduite de pression principale (11, 16, 18, 50, 55, 52) est réglée une pression principale de liquide hydraulique (p_{principale}), et
- dans une conduite d'alimentation (85), menant à un premier embrayage (53) et, le cas échéant, à des actionneurs de vitesse afférents, est réglée une pression d'alimentation (p_{V1}),
- dans une conduite d'alimentation (86), menant à un deux embrayage (84) et, le cas échéant, à des actionneurs de vitesse afférents, est réglée une deuxième pression d'alimentation (p_{V2}),
**caractérisé en ce que**
la valeur de la pression principale de liquide hydraulique (p_{principale, consigne}) à régler est prédéterminée par au moins l'une des pressions d'alimentation (p_{V1,} p_{V2}).

18. Procédé selon la revendication 17,
**caractérisé en ce que** la valeur de la pression principale de liquide hydraulique (p_{principale}, _{consigne}) à régler est prédéterminée par la valeur des deux pressions d'alimentation (p_{V1}, p_{V2}).

19. Procédé selon la revendication 18,
**caractérisé en ce que** la valeur de la pression principale de liquide hydraulique (p_{principale, consigne}) à régler est prédéterminée, allant en augmentant avec la plus grande des deux pressions d'alimentation (p_{V1}, p_{V2}).

20. Procédé selon la revendication 19,
**caractérisé en ce que** la valeur de la pression principale de liquide hydraulique (p_{principale}, _{consigne}) à régler est prédéterminée, proportionnellement à la plus grande des deux pressions d'alimentation (p_{V1}, p_{V2}).

21. Procédé selon la revendication 20,
**caractérisé en ce que** l'on utilise une pression de pilotage hydraulique (p_{St}) comme grandeur de commande, pour prédéterminer la valeur de la pression principale de liquide hydraulique (p_{principale, consigne}) à régler.

22. Procédé selon la revendication 21,
**caractérisé en ce qu'**on utilise comme grandeur de commande, pour régler la première et la deuxième pressions d'alimentation (p_{V1}, p_{V2}), chaque fois des pressions de pilotage (p_{St1}, p_{St2}) hydrauliques correspondances, venant des soupapes de régulation de pression (77, 78), qui sont prévues pour régler les pressions d'alimentation (p_{V1}, p_{V2}), et **en ce que** la plus haute des pressions de pilotage (p_{St1}, p_{St2}) est la pression de pilotage hydraulique (p_{St}) pour prédéterminer la valeur de la pression principale de liquide hydraulique (p_{principale}, _{consigne}) à régler.

23. Procédé selon la revendication 22,
**caractérisé en ce que** les pressions de pilotage (p_{St1}, pₛₜ₂) correspondantes des soupapes de régulation de pression (77, 78) sont fournies par une première conduite d'alimentation (37, 38, 41, 57, 58), dans laquelle règne une basse pression (p_{basse}), indépendante de la pression principale de liquide hydraulique (p_{principale}).
